# EUROPÄISCHE PATENTSCHRIFT

(11) **EP 0 842 500 B1**
(45) Veröffentlichungstag und Bekanntmachung des Hinweises auf die Patenterteilung: **31.03.1999**
(21) Anmeldenummer: 96924783.2
(22) Anmeldetag: 30.07.1996
(51) Int. Cl.: G07C 9/00, G07F 17/10, E05B 49/00

(54) **SPERRVORRICHTUNG FÜR ZEITLICH BEGRENZT ZU NUTZENDE NUTZOBJEKTE**
LOCKING DEVICE FOR SYSTEMS ACCESS TO WHICH IS TIME-RESTRICTED
DISPOSITIF DE VERROUILLAGE POUR SYSTEMES A ACCES LIMITE DANS LE TEMPS

(30) Priorität: 01.08.1995 DE 19528203
(43) Veröffentlichungstag der Anmeldung: 20.05.1998
(73) Patentinhaber: Hogl, Christian, 80469 München (DE)
(72) Erfinder: Hogl, Christian, 80469 München (DE)
(86) Internationale Anmeldenummer: DE9601415
(87) Internationale Veröffentlichungsnummer: WO9705579

(56) Entgegenhaltungen:
- WO-A-92/09054
- GB-A- 2 118 614
- US-A- 3 821 704

## Beschreibung

Elektronische Zugangsberechtigungssysteme bieten gegenüber mechanischen Schließsystemen ein viel höheres Maß an Flexibilität bei der individuellen Vergabe bzw. dem Entzug von Zugangsberechtigungen.

Es sind eine Vielzahl verschiedener Ausführungen solcher elektronischer Zugangsberechtigungssysteme bekannt, die unterschiedliche Kommunikationsverfahren und Identifikationsmittel einsetzen, so z.B. Lochkarten, Magnetkarten, Chipkarten, Prozessorchipkarten, Transponder und dergleichen, wobei sich der Datenaustausch über elektrischen Kontakt, elektromagnetische oder Infrarotsignale und dergleichen vollzieht, ferner Permutationsschlösser, die durch Eingabe von Codes über eine Tastatur bedient werden und bestimmte Protokolle und Algorithmen zur Steuerung und Umprogrammierung verwenden.

Das Prinzip der Codefortschaltung, das eine Erhöhung der Abhörsicherheit bewirkt, findet sich in einer Reihe von Veröffentlichungen, so z.B. DE 27 35 048 C2 oder DE 43 25 137 A1. Diese Systeme beruhen jedoch auf dem Einsatz von intelligenten, mit Speichern ausgestatteten Schlüsseln.

DE 30 31 405 und eine Reihe ähnlicher Systeme, die auf ausgefeilten Umkodierverfahren beruhen, beinhalten eine Speicherung von Zugangsberechtigungsrelationen im Schloß oder in einem Schlüssel.

Nachteilig an allen derartigen Systemen ist, daß die Prüfung der Zugangsberechtigung des Benutzers unmittelbar und lokal im Schloß selbst erfolgt, die Zugriffsberechtigungsinformation also im Schloß und/oder im Schlüssel gespeichert sein muß. Dies bringt folgende Probleme mit sich:

Der Verlust eines Schlüssels bedeutet eine Mißbrauchsgefahr für alle Schlösser, zu denen er paßt. Im Verlustfall müssen diese daher sämtlich vor Ort so umprogrammiert werden, daß der verlorene Schlüssel künftig zurückgewiesen wird.

Das gleiche gilt für schlüssellose Systeme, die nur über die Eingabe von Codes über eine Tastatur arbeiten, im Falle des Bekanntwerdens oder Abhören eines Codes.

Nachteilig ist ferner, daß die einprogrammierte Zugangsberechtigungsrelation sich nur schwer überprüfen oder verändern läßt, weil alle betreffenden Schlösser und/oder Schlüssel überprüft oder umprogrammiert werden müssen. Der Aufwand steigt also mit zunehmender Komplexität der Zugangsberechtigungsrelation zwischen Benutzern bzw. Schlüsseln bzw. Codes und Schlössern stark an und bedingt ein hohes Maß an Logistik.

In DE 20 58 623 wird eine Einrichtung beschrieben, die die genannten Nachteile dadurch beseitigt, daß die Zugriffsrelation in einer zentralen Zugangskontrolleinheit verwaltet wird, wobei jedoch nachteiligerweise eine Verkabelung der Schlösser mit der Zugangskontrolleinheit erforderlich ist.

In DE 24 01 602 C2, das der hier dargestellten Erfindung am nächsten kommt und ebenfalls eine zentrale Codeausgabeeinrichtung und dezentrale Sperrvorrichtungen verwendet, wird der erhebliche Nachteil einer notwendigen Verkabelung beseitigt. Dort wird ein Verfahren zum Verändern von Schloßkombinationen speziell zum Einsatz in Hotels beschrieben, das darauf beruht, daß der Endecode des Zyklus n gleich dem Öffnungscode des Zyklus n+1 ist, die erstmalige Eingabe eines neuen Codes also den alten deaktiviert.

Nachteilig an diesem System im Hinblick auf eine Verwendung in einem Verleihsystem ist jedoch, daß das Ende des Benutzungszyklus nicht vom aktuellen Benutzer festgelegt werden kann, sondern erst mit dem Beginn des nachfolgenden Benutzungszyklus eintritt, also vom nachfolgenden Benutzer eingeleitet wird. Das bedeutet unter anderem, daß der aktuelle Benutzer das Ende seines aktuellen Benutzungszyklus nicht nachweisen kann. Dies schließt jedoch eine Anwendung in einem Verleihsystem aus. Nachteilig an diesem System ist ferner, daß Probleme auftreten können, wenn die Codeausgabeeinheit und eine Sperrvorrichtung "aus dem Tritt geraten", also nicht mehr synchronisiert sind.

In DE 43 01 039 C2 wird ein Verfahren zur gezielten reservierungsabhängigen Freigabe von Fahrzeugen für einen bestimmten Benutzer beschrieben. Dieses erfordert jedoch einen hohen technischen Aufwand (schnurlose Telefone) auf Seiten der Nutzobjekte und feste Stellplätze in der Nähe von Abstellstationen.

Die Aufgabe der Erfindung ist die Bereitstellung einer Sperrvorrichtung für Nutzobjekte, die für eine bestimmte Zeit von einem Benutzer genutzt werden, die die Nachteile der beschriebenen Sperrvorrichtungen vermeidet.

Eine weitere Aufgabe ist es, ein Verfahren bereitzustellen, durch welches die kontrollierte, zeitlich begrenzte Benutzung von Nutzobjekten ermöglicht wird.

Diese Aufgabe wird erfindungsgemäß durch die Patentansprüche 1 und 3 gelöst.

Weitere Merkmale und Vorteile ergeben sich aus den Unteransprüchen.

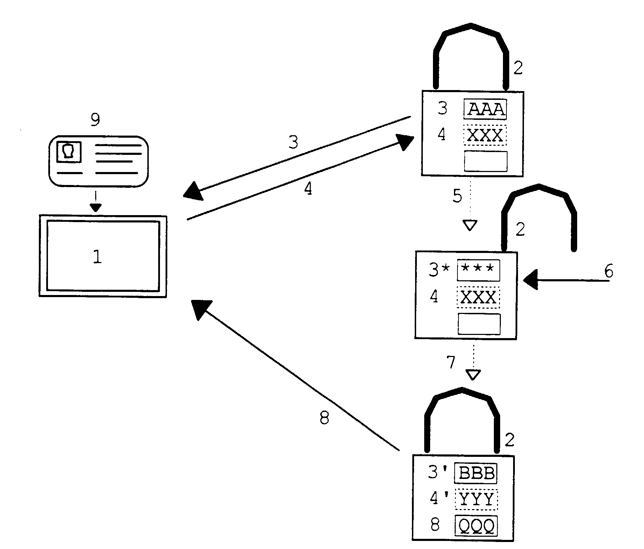

Im folgenden wird die erfindungsgemäße Sperrvorrichtung anhand eines Ausführungsbeispiels in Verbindung mit der Zeichnung beschrieben:

Ein Schließsystem besteht aus einer oder mehreren Sperrvorrichtungen 2 und einer oder mehreren zentralen Zugangskontrolleinheiten 1.

Die Sperrvorrichtung 2 arbeitet mit vier Codes, nämlich einem Codeanforderungscode 3, einem Öffnungscode 4, einem Endecode 6 und einem Quittungscode 8.

Die Codes sind ganz oder teilweise variabel derart, daß sie sich bei jedem Benutzungszyklus ganz oder teilweise verändern. Dieses Prinzip ist als Codefortschaltung bekannt.

Ein Benutzungszyklus erstreckt sich vom ersten Öffnen durch erstmalige Eingabe des Öffnungscodes 4 bis zum abschließenden Verriegeln durch Eingabe des Endecodes 6.

Die Codefortschaltungsvorschrift ist geheim und nur der Sperrvorrichtung und der Zugangskontrolleinheit bekannt. Zwischen den Codes kann teilweise ein geheimer Zusammenhang bestehen derart, daß sich tatsächlich nur einer der Codes nach der Codefortschaltungsvorschrift verändert und die anderen Codes infolgedessen teilweise so angepaßt werden, daß sie wieder dem geheimen Zusammenhang genügen.

Die Codes und die Codefortschaltungsvorschrift haben dabei die Eigenschaft, daß auch bei Beobachtung mehrerer Benutzungszyklen nicht oder nur mit sehr großem Aufwand auf einen Zusammenhang zwischen den Codes eines Benutzungszyklus untereinander oder zwischen den Codes aufeinanderfolgender Benutzungszyklen geschlossen werden kann. Die Codefortschaltungsvorschrift bzw. der Zusammenhang der Codes untereinander ist dabei idealerweise für jede Sperrvorrichtung verschieden, so daß ein Brechen des Codes nur einen begrenzten Schaden nach sich ziehen kann.

Der Codeanforderungscode 3 besteht im einfachsten Fall lediglich aus einer festen Objekt- bzw. Sperrvorrichtungsnummer. Er ist nicht notwendig, aber nützlicherweise variabel. Er dient, sofern er variabel ist, zum einen als Information für einen potentiellen Benutzer, der bei einem vorgefundenen Objekt aus ihm ableiten kann, ob sich dieses gerade in Benutzung befindet. Zum anderen identifiziert er den Benutzungszyklus und -zustand und teilt als initiale Eingabeinformation der Zugangskontrolleinheit 1 nicht nur mit, welche Sperrvorrichtung 2 geöffnet werden soll, sondern auch, in welchem Benutzungszyklus und -zustand sich diese befindet. Dies erhöht die Zuverlässigkeit der Synchronisation der Sperrvorrichtung 2 mit der Zugangskontrolleinheit 1. Der Codeanforderungscode 3 kann darüber hinaus Zusatzdaten über den Zustand des Nutzobjektes enthalten, so z.B. einen Anfangszählerstand oder dergleichen. Diese Zusatzdaten sollten dabei zum Schutz gegen Manipulation verschlüsselt oder über eine verschlüsselte Prüfsumme gesichert sein.

Der Öffnungscode 4 entspricht einem temporär gültigen Schlüssel und steuert die Öffnung der Sperre, also die Freigabe des von der Sperrvorrichtung 2 kontrollierten Objekts zur Benutzung. Wird er eingegeben, so öffnet sich die Sperre und das Objekt kann benutzt werden. Dies gilt genau für die Dauer des aktuellen Benutzungszyklus, also ggf. für mehrere Öffnungsvorgänge, wobei ein temporäres Wiederverschließen der Sperre ohne Code, z.B. durch mechanisches Schließen oder ein einfaches Tastensignal erfolgen kann. Mit Ablauf des Benutzungszyklus verliert der Öffnungscode 4 aufgrund der Codefortschaltung seine Gültigkeit. Der Öffnungscode 4 kann zweckmäßigerweise von der Zugangskontrolleinheit 1 stammende, für das Nutzobjekt bestimmte Zusatzdaten enthalten, durch die z.B. die Anzahl oder die Art der Nutzvorgänge des Nutzobjektes oder die Nutzungsdauer eingeschränkt wird. Auch diese Zusatzdaten sollten dabei zum Schutz gegen Manipulation verschlüsselt oder über eine verschlüsselte Prüfsumme gesichert sein.

Die Eingabe des Endecodes 6 markiert das Ende eines Benutzungszyklus. Bei Eingabe dieses Codes muß sich die Sperrvorrichtung entweder bereits im gesperrten Zustand befinden, oder sie geht in diesen Zustand über. Der Quittungscode 8 wird ausgegeben, und die Codefortschaltung wird ausgeführt (4->4'). Eine Wiederöffnung ist dann nur gegen die Anforderung des neuen Öffnungscodes 4' von der Zugangskontrolleinheit möglich. Der Endecode 6 kann lediglich aus einem einfachen Signal bestehen, das das Ende des Benutzungszyklus anzeigt. Zweckmäßigerweise sollte dies jedoch nur vom rechtmäßigen Benutzer ausgelöst werden können, der Endecode 6 somit nur diesem zugänglich bzw. bekannt sein. Der Endecode 6 kann dabei zweckmäßigerweise in einer einfachen Beziehung zum Öffnungscode 4 stehen, beispielsweise aus dem Öffnungscode 4 in umgekehrter Reihenfolge oder einer Zusatzziffer und dem Öffnungscode 4 bestehen, oder er kann gleich dem Öffnungscode 4 sein, aber erst durch Betätigen eines Zusatzsignals seine Wirkung als Endecode 6 entfalten.

Der Quittungscode 8 ist für die abschließende Eingabe in die Zugangskontrolleinheit 1 vorgesehen. Er dient dieser gegenüber als entlastender Nachweis der Beendigung der Benutzung des von der Sperrvorrichtung 2 kontrollierten Nutzobjektes. Ihm kommt insbesondere beim Einsatz in Verleihsystemen Bedeutung zu. Auch dieser Quittungscode 8 kann zweckmäßigerweise Zusatzdaten enthalten, z.B. über gefahrene Kilometer oder Anzahl und Art der genutzten Funktionen des Nutzobjektes, welche abschließend von der Zugangskontrolleinheit 1 zum Zwecke der Abrechnung ausgewertet oder gespeichert werden können. Die Abrechnung könnte z.B. in der Rückgabe eines vorher eingegebenen Pfandes abzüglich der Nutzgebühr bestehen. Auch für diese Zusatzdaten empfiehlt sich eine Sicherung durch Verschlüsselung oder eine verschlüsselte Prüfsumme.

Die Übertragung der Codes zwischen Zugangskontrolleinheit 1 und Sperrvorrichtung 2 kann durch elektromagnetische Signale, wie z.B. Infrarotsignale, gänzlich ohne Zutun des Benutzers geschehen.

Ebenso möglich ist der Einsatz verschiedener Trägermedien zur Codeübertragung in der Hand des Benutzers. Als Trägermedium denkbar wären Magnetkarten, Chipkarten, Prozessorchipkarten, magnetbeschichtete Papierstreifen, Papierstreifen mit ausgestanzten Lochmustern oder aufgedruckten Strichcodes, abgewandelte infrarotsignalgesteuerte KFZ-Schlüssel und dergleichen.

In ganz oder teilweise manuellen Ausführungsvarianten könnte die Codeübertragung durch einfaches Ablesen von LCD-Displays und die Eingabe über Tastaturen erfolgen.

In allen Varianten kann zur Überbrückung großer Distanzen die Codeübertragung teilweise über eine Telefonverbindung erfolgen.

Der Berechtigungsnachweis des Benutzers gegenüber der Zugangskontrolleinheit 1 kann nach einem dem Stand der Technik entsprechenden Verfahren geschehen, z.B. über eine Magnetkarte oder eine Chipkarte oder eine Prozessorchipkarte oder ein biometrisches Verfahren oder den Austausch von codierten Signalen z.B. durch ein Infrarotsignal-Schlüsselmodul oder über einfache Eingabe eines Geheimcodes über Tastatur. Die Zugangskontrolleinheit 1 kann dabei verschiedene Funktionen ausüben. Das reicht von der einfachen Entgegennahme eines Pfandes mit abschließender Rückgabe eines Restwertes bis zur Speicherung aller Benutzungsvorgänge und einer Abrechnung über ein Konto.

Im folgenden wird das erfindungsgemäße Verfahren zur kontrollierten Benutzung der Nutzobjekte anhand eines Ausführungsbeispiels in Verbindung mit der Zeichnung beschrieben:

Der Codeanforderungscode 3, der (verschlüsselte) Statusdaten des Nutzobjektes enthalten kann, wird dem zur Benutzung vorgesehenen Nutzobjekt bzw. der Sperrvorrichtung 2 entnommen und in die Zugangskontrolleinheit 1 eingegeben, wodurch die zu öffnende Sperrvorrichtung 2 und ggf. deren Zustand identifiziert wird. Zusätzlich wird gegenüber der Zugangskontrolleinheit 1 nach einem dem Stand der Technik entsprechenden Verfahren die Berechtigung zum Öffnen der durch den Codeanforderungscode 3 festgelegten Sperrvorrichtung 2 und damit zur Benutzung des entsprechenden Nutzobjektes nachgewiesen (9) und ggf. ein Pfand eingezahlt. Bei positivem Ergebnis dieser Prüfung wird der für die Sperrvorrichtung 2 gerade aktuelle Öffnungscode 4, in dem auch noch Zusatzdaten zur Auswertung durch das Nutzobjekt und Steuerung desselben enthalten sein können, ausgegeben.

Dieser wird der Sperrvorrichtung 2 eingegeben, woraufhin sich die Sperre öffnet (5) und das Nutzobjekt benutzt werden kann. Ein temporäres Wiederverschließen und Wiederöffnen mit dem Öffnungscode 4, z.B. bei Fahrzeugen, ist während des Benutzungszyklus möglich. Der Codeanforderungscode 3 kann für die Dauer des Benutzungszyklus derart modifiziert werden (3 -> 3*), daß für einen Benutzer, der ein verschlossenes Nutzobjekt vorfindet, daraus hervorgeht, daß dieses gerade in Benutzung ist.

Soll die Benutzung beendet werden, wird der Endecode 6 eingegeben. Dieser kann zweckmäßigerweise z.B. aus dem Öffnungscode 4 in Kombination mit einem zusätzlichen Signal bestehen. Die Sperrvorrichtung geht daraufhin ggf. in einen gesperrten Zustand über (7), sofern sie sich nicht bereits in einem solchen befindet, gibt den Quittungscode 8 aus und schaltet sich durch die Codefortschaltung so um, daß eine Weiterbenutzung nur gegen Anforderung eines neuen Öffnungscodes 4' möglich ist. Der Quittungscode 8 kann wieder in die Zugangskontrolleinheit 1 eingegeben werden, wodurch entlastenderweiese die Beendung der Benutzung des Nutzobjektes nachgewiesen wird und ggf. mit Hilfe von im Quittungscode 8 enthaltenen (verschlüsselten) Zusatzdaten eine abschließende Abrechnung, also z.B. eine Pfandrückgabe oder dergleichen erfolgt. Der Anforderungscode 3* kann dabei derart modifziert werden (3* -> 3'), daß aus ihm zum einen der neue Benutzungszyklus, zum anderen der Zustand (nicht in Benutzung) eindeutig hervorgeht. Dies stellt die Synchronisation der Sperrvorrichtung 2 mit der Zugangskontrolleinheit 1 sicher. Zweckmäßigerweise kann der neue Codeanforderungscode 3' gleich dem vorhergehenden Quittungscode 8 sein.

Die Vorteile der Erfindung sind die folgenden:

Der Benutzer kann zum einen das Ende des Benutzungsvorgangs selbst vorgeben, zum anderen nachweisen, daß die Benutzung beendet ist. Dies sind wichtige Voraussetzungen für ein Verleihsystem, die die oben beschriebenen Vorrichtungen und Verfahren nach dem Stand der Technik nicht erfüllen.

Die Synchronisation zwischen Sperrvorrichtung und Zugangskontrolleinheit ist durch die Verwendung des Codeanforderungscodes 3 sichergestellt, was bei den genannten, bekannten Verfahren nicht der Fall ist.

Für die vielfach vorhandenen Sperrvorrichtungen 2 kann ein billiges, weniger sicheres Code-Ein-/Ausgabeverfahren gewählt werden, z.B. eine einfache Tastatur und ein einfaches LCD-Display, für die Benutzungsberechtigungsprüfung 9 gegenüber der in der Regel nur einfach vorhandenen Zugangskontrolleinheit 1 hingegen ein aufwendigeres, teureres Verfahren, wie z.B. eine Prozessorchipkarte.

Die in den mehrfach vorhandenen Sperrvorrichtungen 2 zu implementierende Logik ist sehr einfach und besteht im wesentlichen nur aus einem Öffnungscodevergleich und einem Codefortschaltungsalgorithmus, was eine kostengünstige Herstellung ermöglicht.

Die Sicherheit ist hoch, weil ein Abhören der Kommunikation mit der Sperrvorrichtung 2 kaum Schaden anrichten kann, da die gewonnenen Informationen mit dem Ende des Benutzungszyklus wertlos werden. Da ggf. verwendete Schlüssel (Trägermedium zur Codeübertragung) nur temporäre Gültigkeit haben, zieht ein Verlust derselben keine größeren Schäden oder Schloß-Umprogrammierungen nach sich, wie es bei Systemen mit dauerhaft gültigen Schlüsseln der Fall ist.

Eine Informationsverbindung zwischen Zugangskontrolleinheit 1 und Sperrvorrichtung 2 braucht nicht simultan und "online" zu bestehen, sondern kann sich zwischengeschalteter Trägermedien bedienen. Dies ermöglicht eine räumliche und zeitliche Trennung des Berechtigungsnachweises 9 vom Schließvorgang 5. In Verbindung mit dem Einsatz einer Telefonverbindung gestattet dies z.B. eine einfache und kostensparende Überbrückung beliebig großer Distanzen zwischen einer zentralen Zugangskontrolleinheit 1 und einer Vielzahl beliebig stationierter Sperrvorrichtungen 2, was in einem späteren Beispiel beschrieben wird.

Die Erfindung ermöglicht somit die Einrichtung eines Verleihsystems, das folgende Möglichkeiten und Vorteile aufweist:
komplette Automatisierung, damit Kostensenkung und Rund-um-die-Uhr-Betrieb;
dezentrale Verteilung der Entleihstationen bzw. der Nutzobjekte;
zentrale, einfache Verwaltung häufig wechselnder Benutzungsberechtigungsrelationen;
Abwicklung von Entleihvorgängen ohne physische Übergabe von Schlüsseln oder Belegen.

Im folgenden soll nun ein Anwendungsbeispiel der Erfindung geschildert werden:

Es handelt sich um ein automatisiertes Fahrradverleihsystem, bei dem einem registrierten Benutzerkreis jederzeitiger Zugriff auf eine Menge von in einem Gebiet beliebig plazierten Fahrrädern möglich ist, wobei die Benutzungsdaten aus Sicherheitsgründen und zu Abrechnungszwecken erfaßt werden sollen. Entleihung und Rückgabe geschieht durch Kommunikation mit einem Computer per Telefon.

Die Sperrvorrichtung 2 besteht in einem Fahrradschloß, das die erfindungsgemäßen Eigenschaften besitzt: das Eingabemedium ist eine Tastatur, das Ausgabemedium eine z.B. sechsstellige LCD-Anzeige. Im verriegelten Zustand läßt sich das Fahrrad nicht bewegen, was dadurch zusätzlich sichergestellt sein kann, daß eine dem Stand der Technik entsprechende Alarmanlage integriert ist, die beim Verriegeln "scharf" gemacht wird. Im entriegelten Zustand ist die Alarmanlage entschärft und das Fahrrad läßt sich bewegen und fahren.

Die Zugangskontrolleinheit 1 besteht in einem Computersystem, das über handelsübliche Modems mit Telefonleitungen verbunden ist. Die Steuerung und Dateneingabe durch einen anrufenden Benutzer geschieht durch Mehrfrequenzwähltöne, die man mit den meisten Telefonen über die Tastatur oder mit billigen, handelsüblichen Zusatzgeräten erzeugen kann. Solche Computersysteme sind Stand der Technik, z.B. bei automatischen TelefonbankingSystemen.

Ein Benutzungszyklus läuft folgendermaßen ab:

Die Fahrräder werden vereinbarungsgemäß in der Nähe von Telefonzellen abgestellt. Der Benutzer findet ein solches abgestelltes Fahrrad und möchte es benutzen. Dazu liest er eine Fahrradnummer und von der LCD-Anzeige an dem verriegelten Schloß eine weitere Nummer ab. Die Kombination dieser Nummern bildet den Codeanforderungscode 3. Mit dieser Information betritt er die Telefonzelle und ruft den Zugangskontrollcomputer 1 an. Dieser bittet ihn um Eingabe seiner Benutzernummer, seiner Geheimnummer (PIN) (9), und des kombinierten Codeanforderungscodes 3, bestehend aus der Fahrradnummer und der am Schloß angezeigten Nummer. Die Benutzerdaten werden geprüft, der Codeanforderungscode 3 ggf. mit den gespeicherten Zustandsdaten des betreffenden Fahrrades verglichen, die Berechtigung zur Benutzung dieses Fahrrades geprüft, der neue Ausleihzustand gespeichert und der zu diesem Fahrrad und zum aktuellen Benutzungszyklus gehörende mehrstellige Öffnungscode 4 ermittelt. Dieser Öffnungscode 4 wird dem Benutzer nun akustisch mitgeteilt. Das betreffende Fahrrad gilt damit vereinbarungsgemäß als vom betreffenden Benutzer ausgeliehen. Der Benutzer kann das Schloß nun durch Eingabe des Öffnungscodes 4 öffnen und das Fahrrad benutzen. Während der Benutzung kann er das Schloß jederzeit verriegeln und durch erneute Eingabe des Öffnungscodes 4 wieder öffnen. Der auf dem LCD-Display angezeigte Codeanforderungscode 3 wird während des Benutzungszyklus ausgeblendet und stattdessen ein Hinweis 3* angezeigt, der einem potentiellen Nachbenutzer signalisiert, daß dieses Fahrrad gerade in Benutzung ist. Am Ende der Benutzung stellt der Benutzer das Fahrrad wieder vereinbarungsgemäß z.B. in der Nähe einer Telefonzelle ab. Er verriegelt das Schloß, drückt eine spezielle Ende-Taste und gibt erneut den Öffnungscode 4 ein. Die Kombination aus Ende-Taste und Öffnungscode 4 interpretiert das Schloß als Eingabe des Endecodes 6. Daraufhin schaltet es auf einen neuen Benutzungszyklus um und führt die Codefortschaltung (4 -> 4') aus, wobei der Quittungscode 8 auf dem LCD-Display angezeigt wird. Dieser Quittungscode 8 des vergangenen Benutzungszyklus ist zugleich der neue Codeanforderungscode 3', den der nächste Benutzer vorfinden wird. Der Quittungscode 8 dient nun dem Benutzer gegenüber dem Zugangskontrollcomputer 1 als Beweis dafür, daß die Benutzung beendet ist. Eine Weiterbenutzung mit dem alten Öffnungscode 4 ist ja nach der Codefortschaltung nicht möglich. Also betritt der Benutzer erneut die Telefonzelle, ruft den Zugangskontrollcomputer 1 an, weist sich diesem gegenüber aus und gibt den Quittungscode 8 ein. Dieser wird vom Computer mit dem gespeicherten, erwarteten verglichen und im Falle der Übereinstimmung wird das Fahrrad als zurückgegeben registriert. Die Nutzungsdaten können dabei zu Abrechnungszwecken gespeichert werden. Denkbar wäre ferner, daß der Benutzer angehalten wird, die Standortnummer der Telefonzelle einzugeben, in der er sich befindet, damit der Computer daraus mit Hilfe eines entsprechenden Verzeichnisses den Standort des betreffenden Fahrrades ermitteln kann. Der Computer kann dann darüber hinaus eine Auskunftsfunktion dergestalt anbieten, daß er bei Eingabe eines momentanen Aufenthaltsortes über die Telefonzellen-Standortnummer oder die eigene Telefonnummer den Standort des nächstgelegenen Fahrrades ermittelt und ausgibt.

Die Vorteile des beschriebenen Systems gegenüber manuellen Systemen liegen in der zeitlichen und räumlichen Ungebundenheit von Entleihung und Rückgabe. Die Vorteile gegenüber bestehenden automatisierten Systemen liegen in der Ungebundenheit des Rückgabeortes und der einfachen Verwaltung der Zugangsberechtigungen durch einen Zentralcomputer sowie der einfachen Abrechnung und wirksamen wie lückenlosen Kontrolle.

Das im vorangegangenen Beispiel beschriebene Verfahren läßt sich auch auf andere Anwendungsbereiche übertragen.

Naheliegend ist die Anwendung für Car-Sharing-Verbünde, Mietwagenflotten bzw. Firmenfuhrparks. Im folgenden soll ein Ausführungsbeispiel für einen Car-Sharing-Verbund beschrieben werden.

Jeder Kunde bzw. Verbundteilnehmen besitzt einen speziellen Verbundschlüssel. Dieser ist folgendermaßen ausgebildet: Ein für alle Verbundschlüssel identischer mechanischer Schlüsselbart entsperrt mechanisch das für alle Fahrzeuge gleichschließende Lenkradschloß. Im Inneren des Verbundschlüssels sitzt ein Mikrochip, der die elektronische Wegfahrsperre freischaltet. Eine Infrarotschnittstelle dient zur Kommunikation mit der Zentralverriegelung. Diese Spezifikation entspricht dem Stand der Technik bei Neufahrzeugen. Zusätzlich verfügt der Verbundschlüssel über eine kleine Tastatur und einen Mehrfrequenzton-Codesender, wie sie bei Handsendern für die Anrufbeantworter-Fernabfrage Stand der Technik sind.

Die Fahrzeugbenutzung funktioniert wie folgt: Der Benutzer ruft über ein beliebiges Telefon die Buchungszentrale an. Er aktiviert den Verbundschlüssel durch die Eingabe einer Schlüssel-PIN. Die Authentisierung gegenüber der Zugangskontrolleinheit 1 in der Buchungszentrale geschieht, indem der Kunde den Codesender des Verbundschlüssels auf die Sprechmuschel hält und eine spezielle Taste drückt. Der Verbundschlüssel sendet dem Buchungszentralcomputer per Mehrfrequenzsignal einen Authentisierungscode. Nach geprüfter Zugriffsberechtigung wird dem Benutzer der Öffnungscode 4 akustisch übermittelt. Diesen gibt der Benutzer über die Schlüssel-Tastatur ein. Der Verbundschlüssel ist nun aufgeladen. Alternativ könnte die Übertragung des Öffnungscodes 4 auch vom Buchungscomputer 1 zum Verbundschlüssel per Mehrfrequenzsignal erfolgen. Dies würde jedoch einen höheren technischen Aufwand für die vielfach vorhandenen Verbundschlüssel erfordern. Eine Sicherung der übertragenen Codes gegen unbefugte Abhörung läßt sich durch kryptographische Mechanismen leicht implementieren. So könnte z.B. sichergestellt werden, daß der Öffnungscode 4 nur für einen bestimmten Verbundschlüssel gültig ist.

Fahrzeugseitig lassen sich die erfindungsgemäßen Eigenschaften durch eine Softwareanpassung in der Zentralverriegelungs- und Wegfahrsperren-Steuerungseinheit implementieren: die Zentralverriegelung öffnet auf Eingabe des gerade gültigen Öffnungscodes 4 per Infrarotsignal. Die Wegfahrsperre schaltet die Zündung bei Empfang des gerade gültigen Öffnungscodes 4 vom Verbundschlüssel-Mikrochip frei. Kryptographische Sicherungsmechanismen (Codefortschaltung, Public-Private-Key-Verschlüsselung), die bei der Kommunikation zwischen Verbundschlüssel und Zentralverriegelung bzw. Wegfahrsperre Stand der Technik sind, sind in das erfindungsgemäße Codeaustauschprinzip integrierbar: innerhalb eines Benutzungszyklus funktionieren die Schließfunktionen für zwischenzeitliches Absperren und Wiederöffnen konventionell. Das Ende des Benutzungszyklus leitet der Benutzer durch Drücken einer speziellen Ende-Taste auf dem Verbundschlüssel ein. Der Endecode 6 wird der Zentralverriegelung per Infrarotsignal übermittelt. Diese führt die Codefortschaltung aus (4 -> 4') und sendet den Quittungscode 8 zurück.

Zusätzlich liegt die Übermittlung von Buchungs- und Fahrtdaten nahe. Im Öffnungscode 4 enthalten sein oder mit ihm übertragen werden könnten z.B. Informationen über eine maximale Nutzungsfrist, nach deren Überschreitung die Wegfahrsperre die Zündung blockiert. Im Quittungscode 8 enthalten sein oder mit ihm übertragen werden könnten z.B. Informationen über gefahrene Kilometer, überschrittene Höchstgeschwindigkeiten oder von einer Unfall-Daten-Schreiber-Einheit gelieferte Informationen über Unfälle, Karambolagen oder sonstige Unregelmäßigkeiten. Ein GPS-Satellitennavigationssystem könnte den aktuellen Rückgabestandort ermitteln und manipulationssicher mitübermitteln.

Der Quittungscode 8 und die übermittelten Zusatzdaten werden im Mikrochip des Verbundschlüssels zwischengespeichert. Die Rückgabe des Wagens funktioniert analog zur Entleihung. Der Kunde ruft die Buchungszentrale an und übermittelt über den Mehrfrequenz-Codesender des Verbundschlüssels den zwischengespeicherten Quittungscode 8 und eventuelle Zusatzdaten an den Buchungscomputer. Dort werden die Daten ausgewertet und gespeichert und das Fahrzeug als zurückgegeben registriert.

Die Vorteile des beschriebenen Systems sind die folgenden:

Größter Vorteil ist der Wegfall der Notwendigkeit zentraler Verleihstationen. Die Fahrzeuge können an beliebigen Orten abgestellt werden. Dies erweitert den Anwendungskreis, steigert die Akzeptanz und verringert Kosten.

Vorteil gegenüber konventionellen manuellen Verleihverfahren ist der Wegfall des personellen Verwaltungsaufwandes für Berechtigungsprüfung, Fahrzeugschlüsselherausgabe, Registrierung, Schlüsselentgegennahme, Datenerfassung und Datenverarbeitung.

Vorteile gegenüber den in Car-Sharing-Verbünden überwiegend praktizierten Verfahren ist der Wegfall des erheblichen Sicherheitsrisikos und der fehlenden Kontrolle, die durch die Verwendung eines Zentral-Safes entstehen, welcher die Schlüssel aller Fahrzeuge enthält und zu welchem alle Teilnehmer einen Schlüssel besitzen. Ein zusätzlicher Vorteil ist die automatische, direkt computergestützt auswertbare Fahrtdatenerfassung. Umständliches Führen von Fahrtenbüchern entfällt.

Vorteil für den Benutzer im Vergleich zu Konkurrenzsystemen ist, daß er keine Chipkarte besitzen und keinen Bordcomputer bedienen muß. Die Fahrzeugnutzung funktioniert für ihn nach dem Laden des Verbundschlüssels wie die eines Privatwagens. Er öffnet die Zentralverriegelung, startet die Zündung und fährt los. Vorteil für den Betreiber ist der Wegfall der Investition in Bordcomputer-Hardware.

Vorteil gegenüber kreditkartenbasierten Automaten-Systemen mit Schlüsselsafes ist die vereinfachte und beschleunigte Abwicklung. Für den Betreiber entfallen Investitions und Wartungskosten für Automaten und Schlüsselsafes.

Vorteile gegenüber Konkurrenz lösungen auf Basis von Datenverbindungen über Funknetze sind Kosteneinsparungen bei Funk-Hardware und Übertragungsgebühren, Ortsungebundenheit und Ausfallsicherheit.

Eine weitere Anwendungsmöglichkeit für dezentrale Nutzobjekte wird im letzten Beispiel beschrieben. In einem Kopierladen soll ein weitgehend automatisierter Betrieb ermöglicht werden und kostenintensive Investitionen in Zusatzhardware zur Abrechnungsabwicklung auf seiten der vielfach vorhandenen Kopiergeräte vermieden werden. Eine Realisierung dieser Anforderungen könnte wie folgt aussehen:

Die Abrechnung und Geldeinnahme erfolgt durch einen einfach vorhandenen Zentralautomat, der ein Pfand entgegennimmt und einen Öffnungcode für ein bestimmtes Kopiergerät ausgibt. Die geräteseitige Funktionalität läßt sich durch eine einfache Steuersoftwareanpassung ohne mechanische Modifikationen kostengünstig in die Kopiergeräte integrieren. Eine Verkabelung der einzelnen Geräte mit zentralen Zählern ist nicht notwendig, ebensowenig die Installation von Münzautomaten oder Kartenlesern an den Geräten. Durch Eingabe des Öffnungscodes wird ein Gerät durch mitcodierte Zusatzdaten für eine maximale Kopienanzahl und Zeit in Funktion gesetzt. Im abschließend erhaltenen Quittungscode sind die tatsächlich verbrauchten Kopien mitcodiert, woraus die Zentraleinheit in Verbindung mit der abgelaufenen Zeit die Gebühren errechnet und das Restpfand zurückerstattet.

## Patentansprüche

1. Sperrvorrichtung (2) für Nutzobjekte, die für eine bestimmte Zeit von einem Benutzer genutzt werden, wobei die Sperrvorrichtung (2) nach Eingabe eines Öffnungscodes (4) öffnet und nach Eingabe eines Endecodes (6) den Öffnungscode (4) verändert,
dadurch gekennzeichnet,
daß nach Eingabe des Endecodes (6) die Sperrvorrichtung einen Quittungscode (8) ausgibt und daß der Quittungscode (8) als Nachweis des Endes der Benutzung dient.

2. Sperrvorrichtung nach Anspruch 1,
dadurch gekennzeichnet,
daß die Ein- und Ausgabe der Codes ganz oder teilweise durch Mittel zur Datenübertragung erfolgt.

3. Verfahren zur kontrollierten, zeitlich begrenzten Benutzung von Nutzobjekten, welches die Sperrvorrichtung (2) nach Anspruch 1 benutzt, mit folgenden Schritten:
Ausgabe eines Öffnungscodes (4) durch eine Zugangskontrolleinheit (1),
Eingabe des Öffnungscodes (4) in die Sperrvorrichtung (2) zum Öffnen derselben,
Eingabe eines Endecodes (6) in die Sperrvorrichtung zur Beendigung der Benutzung, und
Änderung des Öffnungscodes (4->4') durch die Sperrvorrichtung,
gekennzeichnet durch folgenden Schritt:
Ausgabe eines Quittungscodes (8), der als Nachweis des Endes der Benutzung dient.

4. Verfahren nach Anspruch 3,
gekennzeichnet durch
den zusätzlichen ersten Schritt der Eingabe eines von der Sperrvorrichtung gelieferten Codeanforderungscodes (3) in die Zugangskontrolleinheit (1).

5. Verfahren nach Anspruch 3 oder 4,
gekennzeichnet durch
den zusätzlichen ersten Schritt einer Prüfung der Benutzungsberechtigung (9) für das betreffende Nutzobjekt durch die Zugangskontrolleinheit (1).

6. Verfahren nach Anspruch 3, 4 oder 5,
dadurch gekennzeichnet,
daß der Endecode (6) in definierter Weise mit dem Öffnungscode (4) in Zusammenhang steht.

7. Verfahren nach Anspruch 4, 5 oder 6,
dadurch gekennzeichnet,
daß der Quittungscode (8) des Benutzungszyklus n gleich dem Codeanforderungscode (3') des Benutzungszyklus n+1 ist.

8. Verfahren nach einem der Ansprüche 3 bis 7,
dadurch gekennzeichnet,
daß in dem von der Zugangskontrolleinheit ausgegebenen Öffnungscode (4) Zusatzdaten enthalten sind.

9. Verfahren nach einem der Ansprüche 3 bis 8,
dadurch gekennzeichnet, daß im Quittungscode (8) und/oder im Codeanforderungscode (3) Zusatzdaten über das Nutzobjekt enthalten sind.

## Claims

1. Locking device (2) for objects of use, which are to be used for a particular period of time by a user, whereby the locking device (2) opens after the input of an opening code (4) and after input of an end code (6) alters the opening code (4),
characterised in that,
after input of the end code (6), the locking device issues a confirmation code (8) and in that the confirmation code (8) serves as proof of the ending of the use.

2. Locking device according to claim 1,
characterised in that,
the input and output of the codes is effected entirely or partially by means for data transfer.

3. Method for the controlled, time-restricted, use of objects of use, which employs the locking device (2) according to claim 1,
comprising the following steps:
issue of an opening code (4) by an access control unit (1),
input of the opening code (4) into the locking device (2) for opening the same,
input of an end code (6) into the locking device for ending the use, and
alteration of the opening code (4 → 4') by means of the locking device,
characterised by the following step:
output of a confirmation code (8) which serves as proof of the ending of the use.

4. Method according to claim 3,
characterised by,
the additional first step of the input of a code request code (3), provided from the locking device, into the access control unit (1).

5. Method according to claim 3 or 4,
characterised by,
the additional first step of a checking of the use authorization (9) for the object of use concerned, by means of the access control unit (1).

6. Method according to claim 3, 4 or 5,
characterised in that,
the end code (6) is related to the opening code (4) in a defined manner.

7. Method according to claim 4, 5 or 6,
characterised in that,
the confirmation code (8) of the use cycle n is the same as the code request code (3') of the use cycle n+1.

8. Method according to any of claims 3 to 7,
characterised in that,
additional data is contained in the opening code (4) output from the access control unit.

9. Method according to any of claims 3 to 8,
characterised in that,
additional data concerning the object of use is contained in the confirmation code (8) and/or in the code request code (3).

## Revendications

1. Dispositif de verrouillage (2) pour des objets utiles qui sont utilisés pendant un temps déterminé par un utilisateur, où le dispositif de verrouillage (2), après l'introduction d'un code d'ouverture (4), s'ouvre et, après l'introduction d'un code final (6), modifie le code d'ouverture (4), caractérisé en ce qu'après l'introduction du code final (6), le dispositif de verrouillage émet un code de quittance (8) et en ce que le code de quittance (8) sert de preuve de la fin de l'utilisation.

2. Dispositif de verrouillage selon la revendication 1, caractérisé en ce que l'introduction et l'émission des codes a lieu entièrement ou partiellement par des moyens pour la transmission de données.

3. Procédé pour l'utilisation contrôlée, limitée dans le temps, d'objets utiles qui utilise le dispositif de verrouillage (2) selon la revendication 1, avec les étapes suivantes :
émission d'un code d'ouverture (4) par une unité de contrôle d'accès (1),
introduction du code d'ouverture (4) dans le dispositif de verrouillage (2) pour ouvrir celui-ci,
introduction d'un code final (6) dans le dispositif de verrouillage pour terminer l'utilisation,
et modification du code d'ouverture (4 - >4') par le dispositif de verrouillage, caractérisé par l'étape suivante :
émission d'un code de quittance (8) qui sert comme preuve de la fin de l'utilisation.

4. Procédé selon la revendication 3, caractérisé par la première étape additionnelle consistant à introduire un code d'appel de code (3) fourni par le dispositif de verrouillage dans l'unité de contrôle d'accès (1).

5. Procédé selon la revendication 3 ou 4, caractérisé par la première étape additionnelle d'une vérification de l'autorisation d'utilisation (9) pour l'objet utile concerné par l'unité de contrôle d'accès (1).

6. Procédé selon la revendication 3, 4 ou 5, caractérisé en ce que le code final (6) est en rapport d'une manière définie avec le code d'ouverture (4).

7. Procédé selon la revendication 4, 5 ou 6, caractérisé en ce que le code de quittance (8) du cycle d'utilisation n est égal au code d'appel de code (3') du cycle d'utilisation n + 1.

8. Procédé selon l'une des revendications 3 à 7, caractérisé en ce que des données additionnelles sont contenues dans le code d'ouverture (4) émis par l'unité de contrôle d'accès.

9. Procédé selon l'une des revendications 3 à 8, caractérisé en ce que des données additionnelles se raportant à l'objet utile sont contenues dans le code de quittance (8) et/ou dans le code d'appel de code (3).
